# EUROPEAN PATENT APPLICATION

(11) **EP 2 546 303 A1**
(43) Date of publication of application: **16.01.2013**
(21) Application number: 11753455.2
(22) Date of filing: 10.03.2011
(51) Int. Cl.: C08L 71/02, C08G 65/325, C08K 3/32, C08K 5/04, C08K 5/521

(54) **CURABLE COMPOSITION**

(30) Priority: 12.03.2010 JP 2010056555
(71) Applicant: Asahi Glass Company, Limited, Tokyo 100-8405 (JP)
(72) Inventor: SUNAYAMA, Yoshitaka, Tokyo 100-8405 (JP); HATANAKA, Yuki, Tokyo 100-8405 (JP); TANAKA, Hideaki, Tokyo 100-8405 (JP)
(74) Representative: Hartz, Nikolai
(86) International application number: PCT/JP2011/055701
(87) International publication number: WO 2011/111797

(57) **Abstract**

An odorless curable composition containing a hydrolyzable silyl group-containing urethane compound with good storage stability is provided.

A curable composition comprising 100 parts by mass of a polymer (P) obtained by a urethane-forming reaction of a polymer (pP) having a polyoxyalkylene chain and hydroxyl groups and a compound (U) represented by the following formula (I): 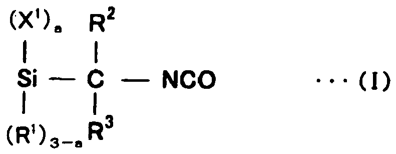 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst and from 0.0001 to 0.1 part by mass of an inorganic acid or an organic acid having an active hydrogen bonded to an oxygen atom.

## Description

### TECHNICAL FIELD

The present invention relates to a curable composition, particularly a curable composition with good storage stability.

### BACKGROUND ART

Curable compositions comprising a polymer having hydrolyzable silicon groups at the ends of a polyoxyalkylene chain (called modified silicone polymers) cure in the presence of moisture to form cured products with excellent rubber elasticity. Therefore, these curable compositions are widely used as adhesives, coatings and sealants. Especially, a curable composition comprising a polymer having methyldimethoxysilyl groups at the ends of a polyoxyalkylene chain is widely accepted in the market as a sealant due to its excellent elastic physical properties (Patent Document 1).

A curable composition containing a polymer having a polyoxyalkylene chain and trialkoxysilyl groups is useful as a fast curing adhesive, coating or sealant since it cures at a high curing rate to a high crosslink density (Patent Document 2).

Further, Patent Document 3 proposes a curable composition with good curability containing a polymer obtained by a urethane-forming reaction of a hydroxyl-containing polymer having a polyoxyalkylene chain and hydroxyl groups and an α-isocyanatosilane compound as a curable component.

Patent Document 4 discloses a curable composition with a high curing rate and good stability comprising a polymer having a polyoxyalkylene chain and trialkoxysilyl groups and a compound having a mercapto group and an alkoxysilyl group.

### PRIOR ART DOCUMENT

### PATENT DOCUMENTS

Patent Document 1: JP-A-3-072527
Patent Document 2: JP-A-3-047825
Patent Document 3: JP-A-2009-173856
Patent Document 4: WO2007/074736

### DISCLOSURE OF INVENTION

### TECHNICAL PROBLEM

However, the curable composition disclosed in Paten Document 1 has a problem that its curing rate is low. The curable composition disclosed in Paten Document 2 has a problem with the storage stability of the hydrolyzable silyl group-containing polyether compound because the polymer having a polyoxyalkylene chain and trialkoxysilyl groups are so reactive, and the catalyst used for introduction of silyl groups can function as a silanol polymerization catalyst. Therefore, the hydrolyzable silyl group-containing polyether compound needs some operations before storage to prevent it from becoming viscous by crosslinking over time and is difficult to handle. The curable composition disclosed in Patent Document 3 also has a problem with its storage stability. Though the curable composition disclosed in Patent Document 4 has better storage stability by virtue of the addition of a mercaptosilane, the odor of the mercaptosilane is problematic.

The object of the present invention is to provide an odorless curable composition containing a hydrolyzable silyl group-containing urethane compound with a high curing rate and good storage stability.

As a result of their extensive research to solve the above-mentioned problems, the present inventors found that addition of a certain amount of a certain acid to a polymer obtained by a urethane-forming reaction of a polymer having a polyoxyalkylene chain and hydroxyl groups and a compound having a reactive silicon group and an isocyanate group in the presence of a urethane-forming catalyst allows a curable composition which solves the above-mentioned problems and accomplished the present invention on the basis of the discovery.

Namely, the curable composition of the present invention is characterized in that it comprises 100 parts by mass of a polymer (P) obtained by a urethane-forming reaction of a polymer (pP) having a polyoxyalkylene chain and hydroxyl groups and a compound (U) represented by the following formula (I): 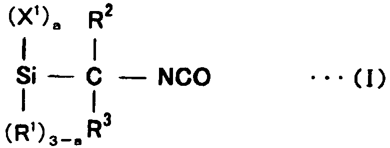 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst and from 0.0001 to 0.1 part by mass of an inorganic acid or an organic acid having an active hydrogen bonded to an oxygen atom.

The inorganic acid or the organic acid having an active hydrogen bonded to an oxygen atom preferably has a dissociation constant pKa of from 1 to 8, more preferably from 1 to 8.

The inorganic acid or the organic acid having an active hydrogen bonded to an oxygen atom preferably has a dissociation constant pKa of from 1 to 8, more preferably from 1 to 8, and the inorganic acid or the organic acid having an active hydrogen bonded to an oxygen atom is preferably an acid selected from the group consisting of acetic acid, lactic acid, phosphoric acid and acidic phosphoric esters.

The polymer (P) in the curable composition of the present invention preferably has a number average molecular weight of from 1,000 to 50,000.

In the curable composition of the present invention, it is preferred that X¹ is a methoxy group.

In the curable composition of the present invention, it is preferred that R² and R³ in the formula (I) are hydrogen atoms.

The method of the present invention of improving the storage stability of a curable composition is characterized in that it comprises adding from 0.0001 to 0.1 part by mass of an inorganic acid or an organic acid having an active hydrogen bonded to an oxygen atom to a polymer (P) obtained by a urethane-forming reaction of a polymer (pP) having a polyoxyalkylene chain and hydroxyl groups and a compound (U) represented by the following formula (I): 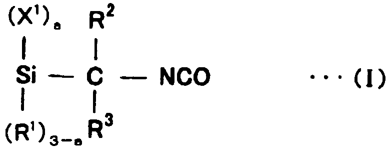 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst.

### ADVANTAGEOUS EFFECT(S) OF INVENTION

According to the present invention, it is possible to obtain an odorless curable composition containing a hydrolyzable silyl group-containing urethane compound having a high curing rate and good storage stability.

### DESCRIPTION OF EMBODIMENT(S)

Now, embodiments of the present invention will specifically be described. Herein, number average molecular weight is referred to as Mn, weight average molecular weight is referred to as Mw, and molecular weight distribution is referred to as Mw/Mn.

Herein, number average molecular weight (Mn) is calculated as polystyrene measured by gel permeation chromatography (GPC) using tetrahydrofuran as the mobile phase, and weight average molecular weight (Mw) is measured similarly by GPC.

Herein, the curable composition of the present invention collectively means a raw curable composition and a final curable composition obtained by adding a curing catalyst, a dehydrator and other additives to a raw curable composition.

### <Raw curable composition>

The raw curable composition of the present invention is a composition comprising a polymer (P) and an inorganic acid or an organic acid having an active hydrogen bonded to an oxygen atom.

The raw curable composition of the present invention is characterized in that by virtue of addition of an inorganic acid or an organic acid having an active hydrogen bonded to an oxygen atom, it has good storage stability and no odor despite its high curing rate, supposedly, though not sure, because the acid deactivates the residual urethane-forming catalyst in the composition by forming a metal salt with the metal moiety of the catalyst and thereby prevents the composition containing a polymer (P) having an alkoxysilyl group from becoming viscous during storage by inhibiting the catalysis of the silanol condensation reaction by the urethane-forming catalyst.

### <Polymer (P)>

The polymer (P) to be contained in the composition of the present invention is obtained by a urethane-forming reaction of a polymer (pP) having a polyoxyalkylene chain and hydroxyl groups and a compound (U) represented by the following formula (I): 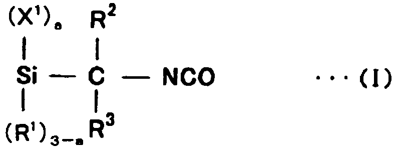 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst.

The number average molecular weight Mn of the polymer (P) is preferably from 1,000 to 50,000, more preferably from 5,000 to 40,000, particularly preferably from 7,000 to 30,000.

When the strength of the cured product of the raw curable composition or the final curable composition is important, the polymer (P) is preferred to have a smaller Mw/Mn because a stronger cured product with a higher elongation at break would be obtained with little change in elastic modulus. Especially, the Mw/Mn of the polymer (P) is preferably at most 3.0, more preferably at most 1.6. When the Mw/Mn is at most 3.0, a stronger polymer (P) is obtained. Especially, a polymer (P) having a Mw/Mn of at most 1.6 contains less of low molecular weight polymer components and hence has a lower viscosity than a polymer (P) having the same Mn and a Mw/Mn larger than 1.6, and hence, can make handleable raw and final curable compositions which can give a cured product having greater tensile elongation at break and greater tensile strength at break. For similar reasons, it is more preferred that the Mw/Mn is at most 1.5, particularly at most 1.4. A polymer (P) having a small Mw/Mn is preferably obtained by reacting a compound (U) with a polyoxyalkylene chain-containing polymer (pP) having a desired Mw/Mn by polymerization of an alkylene oxide catalyzed by a double metal cyanide complex in the presence of an initiator, as mentioned later.

The raw curable composition of the present invention may contain other curable polymers than the polymer (P), such as a modified silicone polymer (C1) having hydrolyzable silicon groups at the ends of a polyoxyalkylene chain, a vinyl polymer (C2) having reactive silicon groups and a polymer (C3), which will be described later.

### <Polymer (pP)>

The polymer (pP) is a polymer having a polyoxyalkylene chain and hydroxy groups.

The polyoxyalkylene chain in the polymer (pP) preferably consists of oxyalkylene polymerized units formed by ring-opening polymerization of a C₂₋₆ alkylene oxide, preferably at least one alkylene oxide selected from the group consisting of ethylene oxide, propylene oxide, butylenes oxide and hexylene oxide, more preferably the combination of propylene oxide and ethylene oxide, particularly preferably propylene oxide alone. When the polyoxyalkylene chain consists of two or more types of oxyalkylene polymerized units, the two or more types of the polymerized units may be arranged in blocks or randomly.

The polymer (pP) has at least one hydroxyl group, preferably from 1 to 4 hydroxyl groups, on average.

The number average molecular weight of the polymer (pP) is preferably from 1,000 to 49,000, more preferably from 1,000 to 39,000, particularly preferably from 1,000 to 29,000. The ratio Mw/Mn of the weight average molecular weight to the number average molecular weight of the polymer (pP) is preferably at most 3.0, more preferably at most 1.6, particularly preferably at most 1.5.

In the present invention, the polymer (pP) is preferably a polymer obtained by ring-opening polymerization of an alkylene oxide with a compound having an active hydrogen (called an initiator) in the presence of a double metal cyanide complex catalyst, i.e., a polyoxyalkylene polyol.

### (Ring-opening polymerization catalyst)

The ring-opening polymerization catalyst used for production of the polymer (pP) is preferably a double metal cyanide complex, particularly preferably a zinc cobalt cyanide complex, and specifically speaking, zinc hexacyanocobaltate is preferred.

The double metal cyanide complex preferably has an organic ligand, preferably of the ether type or of an alcohol type. Specific examples of ether type ligands include ethylene glycol dimethyl ether (glyme), diethylene glycol dimethyl ether (diglyme) and triethylene glycol dimethyl ether.

Specific examples of alcohol type ligands include tert-butyl alcohol, n-butyl alcohol, sec-butyl alcohol, iso-butyl alcohol, tert-pentyl alcohol, iso-pentyl alcohol and ethylene glycol mono-tert-butyl ether.

### (Initiator)

The initiator used for production of the polymer (pP) is an organic compound having at least one active hydrogen atom reactive with an alkylene oxide. The number of active hydrogen atoms in one molecule of the initiator is preferably from 1 to 6, more preferably from 1 to 4.

As the compound having at least one active hydrogen atom, for example, a compound having a hydroxyl group, preferably having from one to four hydroxyl groups, is preferred.

As compounds having a hydroxyl group, monohydric alcohols such as methanol and ethanol; polyhydric alcohols such as ethylene glycol, diethylene glycol, propylene glycol, dipropylene glycol, neopentyl glycol, 1,4-butanediol, 1,6-hexanediol, neopentyl glycol, glycerin, trimethylolmethane, teimethylolpropane, pentaerythritol and diglycerin; and phenols such as phenol and bisphenol A may be mentioned. In addition, polyoxyalkylene monools and polyoxyalkylene polyols having a molecular weight of from 300 to 1500 per hydroxyl group obtained by adding a small amount of an alkylene oxide may also be mentioned. They may be used solely or in combination of two or more.

### <Urethane-forming catalyst>

The urethane-forming reaction of the polymer (pP) and the polymer (U) is carried out in the presence of a urethane-forming catalyst. The double metal cyanide complex remaining in the polymer after polymerization may be used directly as a urethane-forming catalyst. Zinc hexacyanocobaltate, which is used particularly preferably for the synthesis of the polymer (pP), is preferred.

The urethane-forming catalyst is not particularly restricted and may be, for example, an organic tin compound such as dibutyltin diacetate, dibutyltin dilaurate or dioctyltin dilaurate. In addition, bismuth compounds such as bismuth tris(2-ethylhexanoate) (product name: NEOSTANN U-600), zinc compounds such as zinc acetylacetone II (product name: NACEM Zinc), iron compounds such as iron naphthenate, titanium compounds, zirconium compounds, copper compounds such as copper (II) acetylacetone (product name: NACEM Copper), manganese compounds and aluminum compounds may be used as the catalyst.

### <Compound (U)>

The compound (U) used in the present invention is represented by the above-mentioned formula (I).

X¹ is a C₁₋₆ alkoxy group.

The C₁₋₆ alkoxy group as X¹ in the formula (I) representing the compound (U) may be a methoxy group, an ethoxy group, a propoxy group, a butoxy group, a pentyloxy group or a hexyloxy group. Among them, a methoxy group is preferred. When a plurality of X¹s are present, they may be the same or different, but preferably the same in view of availability and reactivity uniformity.

R¹ in the formula (I) representing the compound (U) is a monovalent C₁₋₂₀ organic group, but cannot be an alkoxy group. As such an organic group, a C₁₋₂₀ alkyl group, a C₃₋₂₀ cycloalkyl group, a phenyl group or the like may be mentioned. The C₁₋₂₀ alkyl group may be a methyl group, an ethyl group, a propyl group, a butyl group, a pentyl group, a hexyl group, a decyl group, a dodecyl group, an eicosyl group or the like and is preferably a C₁₋₆ alkyl group, particularly preferably a methyl group. The C₃₋₂₀ cycloalkyl group may be a cyclopropyl group, a cyclobutyl group, a cyclopentyl group, a cyclohexyl group, a cyclooctyl group or the like. When a plurality of R¹s are present, they may be the same or different, but preferably the same. These alkyl groups may be branched or may have a hydrogen atom substituted with a halogen atom such as a fluorine atom, a chlorine atom, a bromine atom or an iodine atom or a cycloalkyl group.

Each of R² and R³ in the formula (I) representing the compound (U) is independently a C₁₋₁₀ alkyl group which may have a substituent or a hydrogen atom.

The alkyl group as R² and R³ may, for example, be a methyl group or an ethyl group. The alkyl group may have a substituent. As the substituent, for example, an ester group or a vinyl group may be mentioned. The alkyl group may be branched and may have a hydrogen atom substituted with a halogen atom such as a fluorine atom, a chlorine atom, a bromine atom or an iodine atom or a cycloalkyl group.

R² and R³ are preferably the combination of hydrogen atoms, the combination of a hydrogen atom and a methyl group or the combination of a hydrogen atom and an ethyl group. a in the formula (I) representing the compound (U) is an integer of from 1, 2 or 3, preferably 2 or 3, in view of curing rate.

Preferred examples of the compound (U) include 1-isonatomethylmethyldimethoxysilane, 1-isocyanatomethyltrimethoxysilane, 1-isocyanatomethylethyldimethoxysilane and 1-isonatomethylethyldimethoxysilane, and particularly preferred are 1-isonatomethylmethyldimethoxysilane and 1-isocyanatomethyltrimethoxysilane.

### <Production of the polymer (P)>

The polymer (pP) may be subjected to the urethane-forming reaction to form a -NH-CO- bond with the compound (U), after purification by removing the double metal cyanide complex remaining after the polymerization, or may be subjected to the urethane-forming reaction with the compound (U) without purification by removing the double metal cyanide complex. The double metal cyanide complex serves as a catalyst not only for the ring-opening polymerization, but also for the urethane-forming reaction. Therefore, when the polymer (pP) is subjected to the urethane-forming reaction with the compound (U) without purification by removal of the double metal cyanide remaining after the polymerization, the urethane-forming proceeds efficiently.

The reaction temperature for the urethane-forming reaction is preferably from 20 to 200°C, particularly preferably from 50 to 150°C. The urethane-forming reaction is preferably carried out under an inert gas atmosphere, preferably under a nitrogen gas atmosphere.

In the urethane-forming reaction, the ratio of total number of isocyanato groups in the compound (U) to the total number of hydroxyl groups in the polymer (pP) (isocyanato groups/hydroxy groups) is preferably from 0.80 to 1.05, particularly preferably from 0.85 to 1.00. When the ratio is within the range, the curing rate and the storage stability of the raw curable composition improve remarkably.

The reason is not sure, but it is supposed that within the range, it is possible to minimize the crosslinking reaction between residual, if any, hydroxyl groups and reactive silicon groups in the polymer (P) and side reactions during the urethane-forming reaction (such as formation of allophantes and isocyanurates) which produce by-products containing reactive silicon groups, and hence the raw curable composition is unlikely to become viscous.

### <Modified silicone polymer (C1)>

The raw curable composition may contain a modified silicone polymer (C1) obtained, for example, by introducing an unsaturated group to a polyoxyalkylene polyol through the terminal hydroxy groups and then converting the terminal unsaturated groups to hydrolyzable silyl groups. The polyoxyalkylene polyol can be obtained in the same manner as the polymer (pP). The termini of the polyoxyalkylene polyol may be converted from hydroxyl groups to unsaturated groups, for example, by converting the terminal hydroxyl groups to an alkali metal or alkaline earth metal alkoxide and then reacting the alkoxide with an unsaturated group-containing compound. For the conversion of terminal hydroxyl groups to an alkoxide, an alkali metal or alkaline earth metal compound such as an alkali metal or alkaline earth metal hydroxide, an alkali metal hydride or an alkali metal alkoxide may be used. The amount of an alkali metal or an alkaline earth metal to be used is preferably from 0.8 to 1.5 mol, more preferably from 0.9 to 1.4 mol, most preferably from 0.95 to 1.3 mol, per mol of terminal hydroxyl group of the polymer (pP).

After the conversion of the terminal hydroxy groups in the polymer (pP) to alkoxides, the alkoxides are reacted with an unsaturated group-containing compound so as to introduce the unsaturated groups in place of the terminal hydroxy groups of the polyoxyalkylene polyol. As the unsaturated group-containing compound, ally chloride or the like may be mentioned.

Then, a compound having a group reactive with an unsaturated group and a hydrolyzable silyl group is reacted with the introduced unsaturated groups to obtain the modified silicone polymer. As the compound having a group reactive with an unsaturated group and a hydrolyzable silyl group, methyldimethoxysilane may, for example, be mentioned.

### <Vinyl polymer (C2) having a reactive silicon group>

The raw curable composition may contain a vinyl polymer (C2) having a reactive silicon group such as an acrylic polymer having a reactive silicon group an alkyl (meth)acrylate monomer units.

The acrylic polymer contains alkyl (meth)acrylate monomer units. It may be a polymer containing only alkyl (meth)acrylate monomer units and may be a polymer which additionally contains other unsaturated group-containing monomer units. The polymer containing alkyl (meth)acrylate monomer units means a polymer repeating units derived from an alkyl (meth)acrylate. Such a polymer is usually obtained by polymerization of unsaturated group-containing monomer(s) containing an alkyl (meth)acrylate monomer as an essential component. In the present invention, an unsaturated group-containing monomer means a compound having an unsaturated bond (preferably a carbon-carbon double bond) capable of forming a polymer, and an alkyl (meth)acrylate means an alkyl acrylate and alkyl methacrylate or a mixture of them.

The type and the number of the alkyl (meth)acrylate monomer units in the acrylic polymer are not limited.

As specific examples of the alkyl (meth)acrylate monomer, methyl (meth)acrylate, ethyl (meth)acrylate, propyl (meth)acrylate, n-butyl (meth)acrylate, isobutyl (meth)acrylate, tert-butyl (meth)acrylate, n-hexyl (meth)acrylate, n-heptyl (meth)acrylate, isoheptyl (meth)acrylate, n-octyl (meth)acrylate, 2-ethylhexyl (meth)acrylate, isooctyl (meth)acrylate, n-nonyl (meth)acrylate, isononyl (meth)acrylate, cyclohexyl (meth)acrylate, decyl (meth)acrylate, dodecyl (meth)acrylate, tetradecyl (meth)acrylate, hexadecyl (meth)acrylate, ocatadecyl (meth)acrylate, eicosanyl (meth)acrylate, docosanyl (meth)acrylate and hexacosanyl (meth)acrylate may be mentioned.

The acrylic polymer may be obtained, for example, by polymerizing the above-described unsaturated group-containing monomer comprising an alkyl (meth)acrylate monomer by radical polymerization, anionic polymerization, cationic polymerization or the like, particularly preferably by radical polymerization, in solution, in emulsion, in suspension or in bulk.

Further, in radical polymerization, for the purpose of controlling the molecular weight, etc., a chain transfer agent may be used. The chain transfer agent may, for example, be an alkyl mercaptan such as n-dodecyl mercaptan, tert-dodecyl mercaptan or n-butyl mercaptan, or an α-methylstyrene dimer.

For introduction of the reactive silicon group to the acrylic polymer, for example, the following method (i), (ii), (iii) or (iv) may be mentioned. Further, two or more of these methods may be combined.
(i): A method of copolymerizing an unsaturated group-containing monomer having a reactive silicon group when the acrylic polymer is prepared by polymerization of an unsaturated group-containing polymer.
(ii): A method of using an initiator having a reactive silicon group when the acrylic polymer is prepared by polymerization of an unsaturated group-containing polymer.
(iii): A method of preparing an acrylic polymer having a functional group such as a hydroxy group, an amino group, a carboxy group, an isocyanato group or an epoxy group, and reacting a compound having a functional group reactive with the functional group and a reactive silicon group therewith.

As specific preferred examples of the unsaturated group-containing compound having a reactive silicon group, vinylsilanes such as vinylmethyldimethoxysilane, vinylmethyldiethoxysilane, vinylmethyldichlorosilane, vinyltrimethoxysilane, vinyltriethoxysilane, vinyltrichlorosilane and tris(2-methoxyethoxy)vinylsilane; and (meth)acryloyloxysilanes such as 3-acryloyloxypropylmethyldimethoxysilane, 3-methacryloyloxypropylmethyldimethoxysilane, 3-acryloyloxypropyltrimethoxysilane, 3-acryloyloxypropyltriethoxysilane, 3-methacryloyloxypropyltrimethoxysilane and 3-methacryloyloxypropyltriethoxysilane may be mentioned.

### <Polymer (C3)>

The polymer (C3) is obtained by a urethane-forming reaction of a compound (U2) represented by the following formula (I-1):

Si(X²)ₘ(R⁴)₃₋ₘ-Q-NCO (I-1)

(wherein Q is a C₂₋₂₀ bivalent linear hydrocarbon group, preferably a C₂₋₁₀ alkylene group, particularly preferably a trimethylene group, X² is a C₁₋₆ alkoxy group, R⁴ is a C₁₋₆ alkyl group, and m is an integer of from 1 to 3) with the above-mentioned polymer (pP) in the presence of the above-mentioned urethane-forming catalyst.

Preferred examples of the compound (U2) include 3-isocyanatopropyltrimethoxysilane, 3-isocyanatopropyltriethoxysilane, 3-isocyanatopropyldimethoxymethylsilane and 2-isocyanatoethyltrimethoxysilane. Among these compound, 3-isocyanatopropyltrimethoxysilane is preferred since the raw curable composition and the final curable composition would have high curing rates. The amount of the polymer (C), if contained in the raw curable composition, is from 0 to 40 parts by mass, preferably form 5 to 35 parts by mass, per 100 parts by mass of the polymer (P). Incorporation of the polymer (C3) like 3-isocyanatopropyltrimethoxysilane makes it possible to control the hardness of cured products of the raw curable composition. The polymer (C3) may be incorporated in the raw curable composition by preparing the polymer (C3) by a urethane-forming reaction of the polymer (pP) and the compound (U2) and then blending the polymer (C3) with the polymer (P).

### <Acid>

Next, the acid to be contained in the raw curable composition of the present invention will be described.

The acid to be contained in the raw curable composition of the present invention is an inorganic acid or an organic acid having an active hydrogen bonded to an oxygen atom.

### (Inorganic acid)

Inorganic acids which may be used in the present invention include phosphoric acids such as orthophosphoric acid, polyphosphoric acid and polymetaphosphoric acid acids containing a nonmetal other than carbon such as hydrochloric acid, chlorous acid, hypochlorous acid, sulfuric acid, sulfurous acid, amidosulfuric acid, nitric acid, nitrous acid, cyanic acid, isocyanic acid boric acid, hydrofluoric acid, phosphinic acid, phosphonic acid, carbonic acid, hydroiodic acid and hydrobromic acid. Further, partial esters such as phosphoric monoesters, phosphoric diesters, phosphoric monoalkyl esters and phosphoric dialkyl esters may also be used. Partial esters of phosphoric acid mean those in which not all the OH groups have been esterified, and some of them are retained.

As partial esters of phosphoric acid, acidic phosphoric esters such as monoalkyl phosphates and dialkyl phosphates may be mentioned. As partial phosphoric esters, those having a C₁₋₁₈ hydrocarbon group are preferred, and the as the C₁₋₁₈ hydrocarbon group, a C₁₋₁₈ alkyl group, a C₃₋₁₈ cycloalkyl group, a C₆₋₁₈ aryl group or the like is preferred.

As the alkyl group, a methyl group, an ethyl group, a propyl group, a butyl group, a hexyl group, an octyl group, a 2-ethylhexyl group, a decyl group, a dodecyl group, a stearyl group or the like may be mentioned. It may also be an alkyl group having an aromatic group such as a benzyl group as a substituent.

The aryl group is preferably a C₆₋₁₀ aryl group such as a phenyl group and may be an aryl group having an alkyl group as a substituent such as a toluyl group or a xylyl group. As the cycloalkyl group, a cyclopentyl group, a cyclohexyl group or the like may be mentioned.

### (Organic acid)

Organic acids which may be used in the present invention are those having an active hydrogen bonded to an oxygen atom and are acidic organic acids having (1) a carboxy group, (2) a sulfo group, (3) a sulfino group, (4) a hydroxyl group, (5) a nitro group or the like. Organic acids having such a group include carboxylic acids, hydroxy acids, sulfonic acids, sulfinic acids, phenol and nitro compounds. As carboxylic acids, monocarboxylic acids such as formic acid and acetic acid; and dicarboxylic acids such as oxalic acid, malonic acid and phthalic acid may be mentioned. As hydroxy acids, lactic acid, malic acid, citric acid and the like may be mentioned. As nitro compounds, 2-nitrophenylhydrazide derivatives and the like may be mentioned.

Specific examples of the organic acid which may be used in the present invention include aliphatic/aromatic monocarboxylic acids such as acrylic acid, valeric acid, isovaleric acid, butyric acid, isobutyric acid, octanoic acid, formic acid, glyoxyl acid, acetic acid, vinylacetic acid, pyruvic acid, propionic acid, hexanoic acid, heptanoic acid, benzoic acid, cyanobenzoic acid, nitorbenzoic acid, anisic acid, cinnamic acid, naphtoic acid, phenylacetic acid, phenoxyacetic acid and 2-furancarboxylic acid; aliphatic/aromatic dicarboxylic acids such as adipic acid, azelaic acid, glutaric acid, succinic acid, oxalic acid, malonic acid, pimelic acid, fumaric acid, maleic acid, phthalic acid, isophthalic acid and terephthalic acid; aliphatic/aromatic tricarboxylic acids such as camphoronic acid, hematic acid and 1,3,5-benzenetricarboxylic acid; aliphatic/aromatic hydroxy acids such as glycolic acid, lactic acid, citric acid, malic acid, tartaric acid, mandelic acid, hydroxybenzoic acid and salicylic acid; aliphatic/aromatic sulfonic acids such as methanesulfonic acid and benzensulfonic acid; aliphatic./aromatic sulfinic acids such as methanesulfinic acid and benzensulfinic acid; phenol, ascorbic acid, pyridoxal pyridoxine and acidic phosphoric esters.

### (Acids having an acid dissociation constant pKa of at most 8)

The acid contained in the raw curable composition of the present invention preferably has an acid dissociation constant of at most 8, more preferably at most 7. The acid dissociation constant pKa is the logarithm of the inverse Ka of the acid dissociation constant, and in the present invention, the acid dissociation constants for the first dissociation disclosed in Kagaku Binran Kiso-Hen the fifth edition are used as pKa. Namely, regarding acidity (proton donating property), a strong acid generally has a small pKa.

### (Acid having an acid dissociation constant pKa of from 1 to 8)

The acid contained in the raw curable composition of the present invention is preferably has an acid dissociation constant pKa of from 1 to 8, because the raw curable composition would hardly corrode metal containers in which it is stored.

Inorganic acids having an acid dissociation constant pKa of from 1 to 8 include, for example, phosphoric acids (orthophosphoric acid, polyphosphoric acid and polymetaphosphoric acid), acidic phosphoric esters, phosphoric monoesters, phosphoric diesters and mixtures thereof.

Organic acids having an acid dissociation constant pKa of from 1 to 8 include, for example, monocarboxylic acids such as formic acid, acetic acid, lactic acid and butyric acid, dicarboxylic acid such as oxalic acid, malonic acid, fumaric acid, maleic acid and phthalic acid and hydroxyl acids such as citric acid and malic acid. Among these organic acids, acetic acid and lactic acid are particularly preferred because these liquid, acids are easy to mix and effective even if not used in a large amount, and an almost odorless raw curable composition would be obtained without discoloration.

Among the above-mentioned acids, orthophosphoric acid is the best choice because it is effective even if not used in a large amount, and an odorless raw curable composition would be obtained without discoloration.

When used in a certain amount, such an acid acts on the urethane-forming catalyst and improves the storage stability of the polymer (P) without side effects such as corrosion of metal containers and discoloration of the polymer (P).

### (Amount of acid)

In the present invention, the inorganic acid or the organic acid having an active hydrogen bonded to an oxygen atom is added in an amount of from 0.0001 to 0.1 part by mass, preferably from 0.001 to 0.05 part by mass, per 100 parts by mass of the polymer (P). If the content of the acid is too low, the acid cannot produce sufficient effect, and if the content of the acid is too high, the acid can unfavorably serves as a curing catalyst. The small amount of water present in the polymer (P) seems to affect the catalysis of the silanol condensation reaction by a urethane-forming catalyst. The acid to be contained in the raw curable composition may be added as purchased, or after dilution with water or an additional solvent, preferably in the form of an aqueous solution. When water or an additional solvent is used, it can be removed from the polyol by vacuum evaporation or the like. As the additional solvent, the same solvent as that to be contained in the raw curable composition may be used, if necessary.

The raw curable composition of the present invention may further contain at least one additive selected from the group consisting of an age resister, a curing catalyst, a filler, a plasticizer, a tackifier, a solvent, a dehydrator, a thixotropic agent and a pigment. Specifically speaking, the same additives to be contained in the after-mentioned final curable composition are selected.

### <Final curable composition>

The final curable composition is obtained by adding a curing catalyst, a dehydrator and other additives.

The final curable composition may contain a modified silicone polymer (C1), a vinyl polymer (C2) or the polymer (C3), in addition to the polymer (P). The amount of the polymer (P) is preferably at least 50 parts by mass, more preferably at least 70 parts by mass, per a total of 100 parts by mass of the polymer (P), the modified silicone polymer (C1), the vinyl polymer (C2) and the polymer (C3).

When packed in a moistureproof container, the final curable composition shows excellent storage stability and a high curing rate.

### <Curing catalyst>

The curing catalyst to be contained in the final curable composition may be any compound that catalyzes the crosslinking of the polymer (P) through silanol condensation reaction without any particular restrictions. Specific examples of the curing catalyst include organic tin compounds, organic metal compounds containing metals other than tin, organic metal alkoxides, metal complexes containing metals other than tin, amino-containing compounds, quaternary ammonium salts, amidine derivative salts and other catalysts.

The curing catalyst is incorporated in the final curable composition preferably in an amount of from 0.01 to 10 parts by mass, more preferably from 0.1 to 5 parts by mass, per 100 parts by mass of the curable polymer(s) in the raw curable composition. When its amount is at least 0.01 part by mass, a good curing rate is obtained regardless what acid is contained in the raw curable composition, and good storage stability is attained unless its amount exceeds 10 parts by mass.

### [Organic tin compounds]

Specific examples of organic tin compounds include organic tin carboxylates such as dibutyltin diacetate, dibutyltin dilaurate, dioctyltin dilaurate, (n-C₄H₉)₂Sn(OCOCH=CHCOOCH₃)₂, (n-C₄H₉)₂Sn(OCOCH=CHCOO(n-C₄H₉))₂, (n-C₈H₁₇)₂Sn(OCOCH=CHCOOCH₃)₂, (n-C₈H₁₇)₂Sn(OCOCH=CHCOO(n-C₄H₉))₂ and (n-C₈H₁₇)₂Sn(OCOCH=CHCOO(iso-C₈H₁₇))₂; sulfur-containing organic tin compounds such as (n-C₄H₉)₂Sn(SCH₂COO), (n-C₈H₁₇)₂Sn(SCH₂COO), (n-C₈H₁₇)₂Sn(SCH₂ CH₂COO), (n-C₈H₁₇)₂Sn(SCH₂COOCH₂CH₂OCOCH₂S), (n-C₄H₉)₂Sn(SCH₂COO(iso-C₈H₁₇))₂, (n-C₈H₁₇)₂Sn(SCH₂COO(iso-C₈H₁₇))₂, (n-C₈H₁₇)₂Sn(SCH₂COO(n-C₈H₁₇))₂, (n-C₄H₉)₂SnS, (iso-C₈H₁₇)₂Sn(SCH₂COO(n-C₈H₁₇))₂; organic tin oxide compounds such as (n-C₄H₉)₂SnO; reaction products of organic tin oxides with esters (such as ethyl silicate, dimethyl maleate, dioctyl maleate, dimethyl phthalate, diethyl phthalate and dioctyl phthalate); organic tin chelates such as (n-C₄H₉)₂Sn(acac)₂, (n-C₈H₁₇)₂Sn(acac)₂, (n-C₄H₉)₂Sn(OC₈H₁₇)(acac), (n-C₄H₉)₂Sn(etac)₂, (n-C₈H₁₇)₂Sn(etac)₂, (n-C₄H₉)₂Sn(OC₈H₁₇)(etac) and tin bisacetylacetonate, reaction products of organic tin chelates and alkoxysilanes (such as tetramethoxysilane, tetraethoxysilane and tetrapropoxysilane); organic tin compounds having a -SnOSn- bond such as (n-C₄H₉)₂(CH₃COO)SnOSn(OCOCH₃)(n-C₄H₉)₂, (n-C₄H₉)₂(CH₃O) SnOSn(OCH₃)(n-C₄H₉); and stannous carboxylate tin 2-ethylhexanoate, tin n-octanoate, tin naphthenate and tin stearate.

Here, acac denotes an acetylacetonato ligand, and etac denotes an ethylacetonato ligand.

### [Organic metal compounds]

Specific examples of organic metal compounds containing metals other than tin include calcium carboxylates, zirconium carboxylates, iron carboxylates, vanadium carboxylates, bismuth carboxylates such as bismuth tris-2-ethylhexanoate, zinc caboxylates, titanium carboxylates and nickel carboxylates.

### [Organic metal alkoxides]

Specific examples of organic metal alkoxides include titanium alkoxides such as tetraisopropyl titanate and tetrabutyl titanate, aluminum alkoxides such as aluminum isopropylate and mono-sec-butoxyaluminum diisopropylate; zirconium alkoxides such as zirconium n-propylate and zirconium n-butylate; and titanium alkoxides such as titanium tetraacetylacetonate, titanium ethyl acetoacetonate, titanium octylenegylcolate and titanium lactate.

### [Metal complexes]

Specific examples of metal complexes containing metals other than tin include aluminum chelates such as aluminum trisacetylacetonate, aluminum trisethylacetoacetate and diisopropoxyaluminum ethylacetoacetate; zirconium chelates such as zirconium tetraacetylacetonate, zirconium bisacetylacetonate, zirconium acetylacetonate bisethylacetoacetate and zirconium acetate.

### [Amino-containing compounds]

Specific examples of amino-containing compounds include any compounds having at least one amino group in the molecule. The amino-containing compounds may be primary amines, secondary amines or tertiary amines and may have both a primary amino group and a secondary amino group.

Examples of primary amines include aliphatic primary amines such as methylamine, ethylamine, propylamine, isopropylamine, isopropanolamine, butylamine, 1-ethylbutylamine, isobutylamine, pentylamine, octylamine, laurylamine, monoethanolamine, diethylaminopropylamine, oleylamine, cyclohexylamine, benzylamine, guanidine, 2-ethylhexylamine and triethylenetetramine; and aromatic primary amines such as aniline, benzylaniline, nitroaniline, phenylenediamine, toluidine, toluylamine, xylenediamine, 2,3-xylidine, anisidine, phenetidine, benzidine, benzylamine and naphthylamine.

Examples of secondary amines include aliphatic secondary amines such as dimetyylamine, diethylamine, diethanolamine, diethylenetriamine, dibutylamine, piperidine, diisopenthlamine, pyrrolidine, morpholine and 2-ethyl-4-ethylimidazole; and aromatic secondary amines such as N-ethylnaphtylamine, acetanilide, acetamidonaphthalene and diphenylguanidine.

Examples of tertiary amines include aliphatic tertiary amines such as trimethylamine, triethylamine, triethanolamine, tripropylamine, tributylamine, 1,4-diazadicyclo[2.2.2]octane (DABCO), 1,8-diazabicyclo[5.4.0]undecene (DBU); and aromatic tertiary amines such as N,N-dimethylaniline, N,N-dibenzylaniline, dimetylaminobenzoic acid and 2,4,6-tris(dimethylaminomethyl)phenol.

As amino-containing compounds, compounds having at least one amino group in the molecule and a reactive silicon group may be used as well.

As specific examples, N-aminoethyl-3-aminopropyltrimethoxysilane, 3-aminopropyltrimethoxysilane, 3-aminopropyltriethoxysilane, N-phenyl-3-aminopropyltrimethoxysilane and the like may be mentioned, and they are all commercially available.

As amino-group containing compounds, compounds having a primary amino group or a secondary amino group are preferred to accelerate curing, and compounds having a primary amino group and a secondary amino group in the molecule are more preferred.

Compounds having a primary amino group and/or a secondary amino group and having a reactive silicon group are especially preferred because they are unlikely to bleed out on the surface of the curable composition after curing.

In the present invention, amino-containing compounds may be used alone or in combination of two or more.

### [Quaternary ammonium salts]

In the present invention, quaternary ammonium salts, which are neutrally charged compounds consisting of a NH⁴⁺ ion (wherein some of the hydrogen atoms may be replaced) and a monovalent anion, may also be used.

### [Amidine derivative salts]

In the present invention, amidine derivative salts, which are quaternary salts derived from amidine, may be used, and the cation of such a compound has an organic group attached to one of the two nitrogen atoms of amidine which is double-bonded to a carbon atom via a lone electron pair and is combined with a monovalent anion.

Specific preferred examples are salts derived from 1,8-diazabicyclo[5.4.0]undec-7-ene (DBU) and salts derived from 1,5-diazabicyclo[4.3.0]non-5-ene (DBN).

They are commercially available, for example, as U-CAT SA1 (the phenol salt of DBU), U-CAT SA102 (the octylate of DBU), U-CAT SA106 (the oleate of DBU), U-CAT SA506 (the p-toluenesulfonate of DBU), U-CAT SA603 (the formate of DBU), U-CAT 1102 (the octylate of DBN) (manufactured by San-Apro Ltd.).

In the present invention, amidine derivative salts may be used alone or in combination of two or more.

The curing catalyst is preferably an amino-containing compound, a quaternary ammonium salt, an amidine derivative salt or an organic tin compound, in view of handling. As an organic tin compound, (n-C₄H₉)₂Sn(acac)₂, (n-C₈H₁₇)₂Sn(acac)₂, (n-C₄H₉)₂Sn(OC₈H₁₇)(acac), (n-C₄H₉)₂Sn(etac)₂ or (n-C₈H₁₇)₂Sn(etac)₂ is particularly preferred in view of high curing rate.

It is also possible to control the curing rate of the final curable composition by properly selecting the curing catalyst. For example, it is possible to lower the curing rate of the final curable composition by selecting a low activity curing catalyst such as certain organic tin compounds having a sulfur-containing ligand (such as UL-29 manufactured by Crompton Corporation and NEOSTANN U-860 manufactured by NITTO KASEI Co., LTD.).

The final curable composition may contain one curing catalyst or may contain two or more curing catalysts, and in the latter case, an organic tin compound and an organic amine are preferred in view of good curability.

### (Dehydrator)

Examples of the dehydrator which may be used in the present invention include alkyl orthoformates such as methyl orthoformate and ethyl orthoformate, hydrolyzable organic silicon compounds such as methyltrimethoxysilane, vinyltrimethoxtysilane, tetramethoxysilane and tetraethoxysilane and hydrolyzable organic titanium compounds. Among them, a compound of the following formula (II) is preferably incorporated. Incorporation of a compound of the following formula (II) in the final curable composition improves the curing rate and storage stability of the final curable composition, supposedly, though not sure, because the hydrolyzable silyl group in the compound of the formula (II) reacts preferentially with the moisture in the final curable composition, the hydroxyl groups possibly remaining in the polymer (P) and the like and thereby suppresses the hydrolytic crosslinking of the polymer (P) over time.

Si(X₂)ₙ(Y¹)₄₋ₙ (II)

In the formula (II), n is an integer of from 1 to 4, preferably 3 or 4, more preferably 4.

In the formula (II), X² is preferably a methoxy group, an ethoxy group, a propoxy group, a butoxy group, a pentyloxy group or a hexyloxy group, particularly preferably a methoxy group. When a plurality of X²s are present, they may be the same or different groups, preferably the same groups.

In the formula (II), Y¹ is preferably a C₁₋₆ alkyl group or a C₂₋₆ alkenyl group, particularly preferably a methyl group, an ethyl group, a propyl group, a butyl group, a heptyl group, a hexyl group or a vinyl group.

Preferred examples of the compounds of the formula (II) include methyltrimethoxysilane, methyltriethoxysilane, ethyltriethoxysilane, phenyltriethoxysilane, methytriacetoxysilane, vinyltrimethoxysilane, tetramethyl orthosilicate (tetramethoxysilane or methyl silicate), tetraethyl orthosilicate, tetrapropyl orthosilicate and tetrabutyl orthosilicate.

The dehydrator is incorporated in the final curable composition preferably in an amount of from 0.1 to 20 parts by mass, particularly preferably from 0.3 to 10 parts by mass, per 100 parts by mass of the curable polymer(s) in the raw curable composition. The dehydrator is effective in removing moisture from the final curable composition when used in an amount of at least 0.1 part by mass, and does not affect the physical properties of the final curable composition unless its amount exceeds 20 parts by mass.

### (Other components)

The final curable composition may further contain, as the case requires, a filler, a plasticizer, a thixotropic agent an age resister, a tackifier, a solvent, a pigment and the like, which will be described below.

In addition to them, the final curable composition may contain a surface modifier, a solvent, a modulus adjustor such as a compound which forms trimethylsilanol by hydrolysis, such as phenoxytrimethylsilane; an air curing compound such as a wood oil; a photo curing compound such as trimethylolpropane triacrylate; an inorganic pigment such as iron oxide, chromium oxide or titanium oxide; and an organic pigment such as phthalocyanine blue or phthalocyanine green. The use of a pigment is effective not only for coloration but also for the purpose of improving weather resistance.

Further, it is also possible to add a known flame retardant or fungicide to the final curable composition. A flatting agent used for an application to coating material, may also be added. If necessary, the final curable composition may contain other additives than those mentioned above.

### (Filler)

Specific examples of fillers include calcium carbonates such as heavy calcium carbonate having an average particle size of from 1 to 20 µm, precipitated light calcium carbonate having an average particle size of from 1 to 3 µm, colloidal calcium carbonate having a surface treated with an aliphatic acid or a resin acid type organic product, and slight calcium carbonate; fumed silica; precipitated silica; silica fine powder having a silicone-treated surface; silicic anhydride; silicic hydride; carbon black; magnesium carbonate; diatomaceous earth; calcined clay; clay; talc; titanium oxide; bentonite; ferric oxide; zinc oxide; active zinc oxide; inorganic hollow bodies such as shriasu balloon, perlite, glass balloon, fly ash balloon, alumina balloon, zirconia balloon and carbon balloon; organic resin hollow bodies such as phenol resin balloon, epoxy resin balloon, urea resin balloon, polyvinylidene chloride resin balloon, polyvinylidene chloride/acrylic resin balloon, polystyrene balloon, polymethacrylate balloon, polyvinyl alcohol balloon, styrene/acrylic resin balloon and polyacrylonitrile balloon; powder fillers such as resin beads, wood flour, pulp, cotton chip, mica, walnut shell flour, rice hull flour, graphite, aluminum fine powder or flint powder; and fibrous fillers such as glass fiber, glass filament, carbon fiber, kepler fiber or polyethylene fiber. Such fillers may be used alone or in combination of two or more.

Among them, calcium carbonate is preferred, and it is particularly preferred to use heavy calcium carbonate and colloidal carbonate in combination.

Further, since it is possible to reduce the weight of the final curable composition and its cured product, it is preferred to use a hollow body as a filler. Further, by using a hollow body, it is possible to improve the stringiness of the composition and to improve the workability. A hollow body may be used alone, but it may be used in combination with another filler such as calcium carbonate.

Such fillers are preferably added in an amount of at most 1,000 parts by mass, more preferably from 50 to 250 parts by mass, per 100 parts by mass of the curable resin component(s).

### (Plasticizer)

The plasticizer may, for example, be a phthalate such as dioctyl phthalate, dibutyl phthalate, butyl benzyl phthalate or isononyl phthalate; an aliphatic carboxylate such as dioctyl adipate, diisodecyl succinate, dibutyl sebacate or butyl oleate; an alcoholic ester such as a pentaerythritol ester; a phosphate such as trioctyl phosphate or tricresyl phosphate; an epoxy plasticizer such as epoxidized soybean oil, dioctyl 4,5-epoxyhexahydrophthalate or benzyl epoxystearate; chlorinated paraffin; a polyester plasticizer such as a polyester obtained by reacting a dibasic acid with a divalent alcohol; or a polymer plasticizer such as a polyether like polyoxypropylene glycol or its derivative obtained, for example, by capping the hydroxy groups of polyoxypropylene glycol with an alkyl ether, a polystyrene oligomer such as poly-α-methylstyrene or polystyrene or an oligomer such as polybutadiene, a butadiene-acrylonitrile copolymer, polychloroprene, polyisoprene, polybutene, hydrogenated polybutene or epoxidized polybutadiene. Such plasticizers may be used in combination of at least two, for example a phthalate and an epoxy plasticizer.

The amount of a plasticizer, if added, is preferably from 1 to 200 parts by mass, more preferably from 1 to 100 parts by mass, per 100 parts by mass of the curable polymer(s) in the raw curable composition.

### (Thixotropic agent)

Incorporation of a thixotropic agent improves the sagging of the final curable composition. Such a thixotropic agent as a hydrogenated castor oil or fatty acid amide is used in an optional amount.

### (Age resister)

As an age resister, a commonly used antioxidant, ultraviolet absorber or light stabilizer can suitably be used. Specifically, a compound of a hindered amine type, a benzotriazole type, a benzophenone type, a benzoate type, a cyanoacrylate type, an acrylate type, a hindered phenol type, a phosphorus type or a sulfur type can suitably be used as an age resister. Particularly, it is preferred to use at least two of a light stabilizer, an antioxidant and an ultraviolet absorber in combination since each of them develops its characteristics to impart all-round age resistance. Specifically, it is preferred to combine a tertiary or secondary hindered amine type light stabilizer, a benzotriazole type ultraviolet absorber and a hindered phenol and/or phosphite type antioxidant.

### (Tackifier)

When the final curable composition is required to form an adherent layer functioning as an adhesive or sealant upon curing, incorporation of a tackifier in the final curable composition improves the adhesion of the cured product to an adherend. As tackifiers, silane coupling agents such as (meth)acryloyloxy-containing silanes, amino-containing silanes, mercapto-containing silanes, epoxy-containing silanes and carboxyl-containing silanes may be mentioned.

As (meth)acryloyloxy-containing silanes, 3-methacryloyloxypropyltrimethoxysilane, 3-acryloyloxypropyltrimethoxysilane, 3-methacryloyloxypropylmethyldimethoxysilane and the like may be mentioned.

As amino-containing silanes, 3-aminopropyltrimethoxysilane, 3-aminopropyltriethoxysilane, 3-aminopropylmethyldimethoxysilane, N-(2-aminoethyl)-3-aminopropyltrimethoxysilane, N-(2-aminoethyl-3-aminopropylmethyldimethoxysilane, N-(2-aminoethyl)-3-aminopropyltriethoxysilane, 3-ureidopropyltriethoxysilane, N-(N-vinylbenzyl-2-aminoethyl)-3-aminopropyltrimethoxysilane, 3-anilinopropyltrimethoxysilane and the like may be mentioned.

As mercapto-containing silanes, 3-mercaptopropyltrimethoxysilane, 3-mercaptopropyltriethoxysilane, 3-mercaptopropylmethyldimethoxysilane, 3-mercaptopyopylmethyldiethoxysilane and the like may be mentioned.

As epoxy-containing silanes, 3-glycidyloxypropyltrimethoxysilane, 3-glycidyloxypropylmethyldimethoxysilane, 3-glycidyloxypropyltriethoxysilane and the like may be mentioned.

As carboxyl-containing silanes, 2-carboxyethyltriethoxysilane, 2-carboxyethylphenylbis(2-methoxyethoxy)silane, N-(N-carboxylmethyl-2-aminoethyl)-3-aminopropyltrimethoxysilane and the like may be mentioned.

Further, as a tackifier, the reaction product of two or more silane coupling agents may be used. Examples of such reaction products include the reaction product of an amino-containing silane and an epoxy-containing silane, the reaction product of an amino-containing silane and a (meth)acryloyloxy-containing silane, the reaction product of an epoxy-containing silane and a mercapto-containing silane and the reaction product of mercapto-containing sillanes. These reaction products can easily be obtained by stirring a mixture of silane coupling agents at a temperature within the range of from room temperature to 150°C for 1 to 8 hours. Such tackifiers may be usd alone or in combination of at least two.

The amount of a tackifier is preferably from 0 to 30 parts by mass, more preferably from 0.1 to 10 parts by mass, per 100 parts by mass of the curable polymer(s) in the raw curable composition.

Another example of tackifier is an epoxy resin or a mixture of an epoxy resin and an epoxy resin curing agent.

The epoxy resin may be any generally known epoxy resin without any particular restrictions. Examples of the epoxy resin include flame-retardant epoxy resins such as bisphenol A-diglycidyl ether type epoxy resins, bisphenol F-diglycidyl ether type epoxy resins and tetrabromobisphenol A-glycidyl ether type epoxy resins, diglycidyl ester type epoxy resins such as novolac type epoxy resins, hydrogenated bisphenol A type epoxy resins, glycidyl ether type epoxy resins of bisphenol A-propylene oxide adducts, glycidyl 4-glycidyloxybenzoate, diglycidyl phthalate, diglycidyl tetrahydrophthalate and diglycidyl hexahydrophthalate, m-aminophenol type epoxy resins, diaminodiphenylmethane type epoxy resins, urethane modified epoxy resins, various alicyclic epoxy resins, N,N-diglycidyl aniline, N,N-diglycidyl-o-toluidine, triglycidyl isocyanurate, polyalkylene glycol diglycidyl ether, glycidyl ethers of polyhydric alcohols (such as glycerol), hydantoin epoxy resins and generally used epoxy resins and epoxy-containing vinyl polymers such as epoxidized unsaturated polymers such as. petroleum resin) epoxy resins.

The amount of an epoxy resin, if added to the final curable composition of the present invention, is preferably at most 100 parts by mass, more preferably from 1 to 50 parts by mass, per 100 parts by mass of the curable polymer(s) in the raw curable composition. If it exceeds 100 parts by mass, a hard cured product with little flexibility is likely to obtained.

The epoxy resin curing agent may be a generally known epoxy resin curing agent without any particular restrictions. Examples of the epoxy resin curing agent include amines such as triethylenetetramine , tetraethylenepentamine, diethylaminopropylamine, N-aminoethylpiperazine, m-xylylenediamine, m-phenylenediamine, diaminodiphenylmethane, diaminodiphenylsulfone, isophoronediamine and 2,4,6-tris(dimethylaminomethl)phenol; blocked amines such as the above-mentioned amines blocked with a ketimine; polyamide resins; imidazoles; dicyandiamides; boron trifluoride complex compounds; carboxylic anhydrides such as phthalic anhydride, hexahydrophthalic anhydride, tetrahydrophthalic anhydride, dodecenylsuccinic anhydride and pyromellitic anhydride; phenoxy resins; carboxylic acids; alcohols; polyalkylene oxide polymers having at least one group reactive with an epoxy group in the molecule on average (such as amino-terminated polyoxypropylene glycol and carboxyl-terminated polyoxypropylene glycol); and liquid functionally terminated polymers such as polybutadienes, hydrogenated polybutadienes, acrylonitrile-butadiene copolymers or acrylic polymers having terminal functional groups such as hydroxyl groups, carboxyl groups or amino groups.

The proportion of the epoxy resin curing agent to be used in combination with the epoxy resin is from at most 300 parts by mass, per 100 parts by mass of the epoxy resin.

### (Solvent)

The final curable composition of the present invention preferably contains no solvent to prevent emission of volatile organic compounds (VOCs), but may contain a solvent for viscosity control, if necessary.

Examples of the solvent used in the present invention include aliphatic hydrocarbons, aromatic hydrocarbons, halohydrocarbons, alcohols, ketones, esters, ethers, ester alcohols, ketone alcohols, ether alcohols, ketone ethers, ketone esters and ester ethers. Use of an alcohol improves the storage stability of the final curable composition. Preferred alcohols are C₁₋₁₀ alkyl alcohols, and methanol, ethanol, isopropanol, isopentyl alcohol or hexyl alcohol is more preferred. Methanol or ethanol is particularly preferred since they are easily available and easily evaporate.

The final curable composition contains, if any, a solvent preferably in an amount of at most 500 parts by mass, more preferably 100 parts by mass, per 100 parts by mass of the curable polymer(s) in the raw curable composition, to prevent emission of VOCs.

### <Application of the raw curable composition>

The raw curable composition of the present invention may be used as an ingredient of the final curable composition in the form of a one-pack type curable composition and mixed with a curing catalyst, a dehydrator and other additives.

The raw curable composition of the present invention may be used as an ingredient of a two-pack type curable composition, which is cured by adding a curing catalyst before use, by mixing it with appropriate ingredients except for the curing catalyst.

The raw curable composition of the present invention has good storage stability and can make a one-pack type curable composition as the final curable composition with good curability which gives cured products having good mechanical properties. In this regard, the raw curable composition of the present invention is suitable as an ingredient of the final curable composition in the form of a one-pack type curable composition.

The raw curable composition is used as an ingredient of a final curable composition for coating and sealing and useful as an ingredient of building sealants, caulkings, adhesives, sealants and coating materials, especially as an ingredient of adhesives and sealants.

### <Application of the final curable composition>

The final curable composition of the present invention has good curability and storage stability and forms cured products having good mechanical properties. The final curable composition is useful as a building sealant, a caulking, an adhesive, a sealant and a coating material, especially as an adhesive and a sealant.

### EXAMPLES

Now, the present invention will be described in further detail with reference to Examples of the present invention and Comparative Examples, but it should be understood that the present invention is by no means restricted thereto.

### [Urethane-forming catalysts]

In the Examples, the following urethane-forming catalysts were used.

NA̅CEM Zinc (manufactured by NIHON KAGAKU SANGYO CO.,LTD.): zinc (II) acetylacetonate; Zn(C₅H₇O₂)₂·H₂O), NAPHTHEX Ferrous (manufactured by NIHON KAGAKU SANGYO CO., LTD.): ferrous naphthenate (iron content 5%), NA̅CEM Copper (manufactured by NIHON KAGAKU SANGYO CO., LTD.): copper (II) acetylacetonate; Cu(C₅H₇O₂)₂, NEOSTANN U-860 (manufactured by NITTO KASEI Co., LTD.): di-n-octyltin bis(isooctyl mercaptoacetate), NEOSTANN U-600 (manufactured by NITTO KASEI Co., LTD.): and bismuth tris(2-ethylhexanoate)

### (PRODUCTION EXAMPLE 1: Production of polymer (A1))

Propylene oxide (hereinafter referred to as "PO") was reacted with polyoxypropylene glycol (Mw: 3,000) as the initiator in the presence of 50 ppm of a zinc hexacyanocobaltate-tert-butyl alcohol complex catalyst to obtain a polyoxypropylene diol (hereinafter referred to as "pP-1") having a number average molecular weight (Mn) of 18,000 and a molecular weight distribution (Mw/Mn) of 1.2.

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer pP-1 was stirred with about 50 ppm, based on pP-1, of NA̅CEM Zinc (manufactured by NIHON KAGAKU SANGYO CO., LTD.) introduced as a urethane-forming catalyst at a constant inner temperature of 50°C, and 54.8 g of 3-isocyanatomethylmethyldimethoxysilane (purity 95%) was introduced so that the NCO/OH would be 0.97. Then, the urethane-forming reaction of polymer (pP-1) and 3-isocyanatopropyltrimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A1)").

The Mn and Mw/Mn of polymer (A1) were 19,500 and 1.35, respectively.

### (PRODUCTION EXAMPLE 2: Production of polymer (A2))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 50 ppm, based on pP-1, of NAPHTHEX Ferrous (manufactured by NIHON KAGAKU SANGYO CO., LTD.) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A2)").

The Mn and Mw/Mn of polymer (A2) were 20,300 and 1.43, respectively.

### (PRODUCTION EXAMPLE 3: Production of polymer (A3))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 80 ppm, based on pP-1, of NA̅CEM Copper (manufactured by NIHON KAGAKU SANGYO CO., LTD.) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A3)").

The Mn and Mw/Mn of polymer (A3) were 20,550 and 1.44, respectively.

### (PRODUCTION EXAMPLE 4: Production of polymer (A4))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 80 ppm, based on pP-1, of an organic tin compound catalyst (NEOSTANN U-860 (manufactured by NITTO KASEI Co., LTD.)) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal metyldimethoxysilyl groups (hereinafter referred to as "polymer (A4)").

The Mn and Mw/Mn of polymer (A4) were 19,000 and 1.32, respectively.

### (PRODUCTION EXAMPLE 5: Production of polymer (A5))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 80 ppm, based on pP-1, of an inorganic bismuth catalyst (NEOSTANN U-600 (manufactured by NITTO KASEI Co., LTD.)) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A5)").

The Mn and Mw/Mn of polymer (A5) were 19,500 and 1.35, respectively.

### (PRODUCTION EXAMPLE 6: Production of polymer (A6))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 200 ppm (22 ppm in terms of zinc, and 9 ppm in terms of cobalt) of a zinc hexacyanocobaltate-glyme complex catalyst (DMC glyme) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A6)").

The Mn and Mw/Mn of polymer (A6) were 19,500 and 1.35, respectively.

### (PRODUCTION EXAMPLE 7: Production of polymer (A7))

In a pressure proof reactor (inner volume 5 L), 3,000 g of polymer (pP-1) was dehydrated under reduced pressure at a constant inner temperature of 110°C. After the atmosphere in the reactor was replaced by nitrogen gas, polymer (pP-1) was stirred with about 160 ppm, based on pP-1, of an inorganic bismuth catalyst (NEOSTANN U-600 (manufactured by NITTO KASEI Co., LTD.)) introduced as a urethane-forming catalyst at a constant inner temperature of 50°C, and 54.8 g of 1-isocyanatomethylmethyldimethoxysilane (purity 95%) was introduced so that the NCO/OH would be 0.97. Then, the urethane-forming reaction of polymer (pP-1) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A7)").

The Mn and Mw/Mn of polymer (A7) were 20,000 and 1.40, respectively.

### (PRODUCTION EXAMPLE 8: Production of polymer (A8))

Propylene oxide (hereinafter referred to as "PO") was reacted with polyoxypropylene triol (Mw: 1,000) as the initiator in the presence of 50 ppm of a zinc hexacyanocobaltate-tert-butyl alcohol complex catalyst to obtain a polyoxypropylene triol (hereinafter referred to as "pP-2") having a number average molecular weight (Mn) of 25,000 and a molecular weight distribution (Mw/Mn) of 1.2.

In a pressure proof reactor (inner volume 5 L), 3,000 g of polymer (pP-2) was dehydrated under reduced pressure at a constant inner temperature of 110°C. After the atmosphere in the reactor was replaced by nitrogen gas, polymer (pP-2) was stirred with about 50 ppm, based on pP-2, of NACEM Zinc (manufactured by NIHON KAGAKU SANGYO CO., LTD.) introduced as a urethane-forming catalyst at a constant inner temperature of 50°C, and 59.3 g of 1-isocyanatomethyldimethoxysilane (purity 95%) was introduced so that the NCO/OH would be 0.97. Then, the urethane-forming reaction of polymer (pP-2) and 1-isocyanatomethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A8)").

The Mn and Mw/Mn of polymer (A8) were 26,600 and 1.39, respectively.

### (PRODUCTION EXAMPLE 9: Production of polymer (A9))

PO was reacted with polyoxypropylene glycol (Mw: 3,000) as the initiator in the presence of a zinc hexacyanocobaltate-glyme complex catalyst (DMC glyme) (200 ppm) to obtain a polyoxypropylene diol (polymer (pP-3)) having a number average molecular weight (Mn) of 16,000 and a molecular weight distribution (Mw/Mn) of 1.38. The amount of the residue of the double metal cyanide complex catalyst was 21.5 ppm in terms of zinc and 9.2 ppm in terms of cobalt.

In a pressure proof reactor (inner volume 5 L), 3,000 g of polymer (pP-3) was dehydrated under reduced pressure at a constant inner temperature of 110°C. After the atmosphere in the reactor was replaced by nitrogen gas, 61.7 g of 1-isocyanatomethylmethyldimethoxysilane (purity 95%) was introduced at a constant inner temperature of 50°C so that the NCO/OH would be 0.97. Then, the urethane-forming reaction of polymer (pP-3) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A9)").

The Mn and Mw/Mn of polymer (A9) were 17,000 and 1.35, respectively.

### (PRODUCTION EXAMPLE 10: Production of polymer (A10))

Propylene oxide (hereinafter referred to as "PO") was reacted with polyoxypropylene glycol (Mw: 3,000) as the initiator in the presence of 50 ppm of a zinc hexacyanocobaltate-tert-butyl alcohol complex catalyst to obtain a polyoxypropylene diol (hereinafter referred to as "pP-4") having a number average molecular weight (Mn) of 12,000 and a molecular weight distribution (Mw/Mn) of 1.2.

In a pressure proof reactor (inner volume 5 L), 3,000 g of polymer (pP-4) was dehydrated under reduced pressure at a constant inner temperature of 110°C. After the atmosphere in the reactor was replaced by nitrogen gas, polymer (pP-4) was stirred with about 80 ppm, based on pP-4, of an inorganic bismuth catalyst (NEOSTANN U-600 (manufactured by NITTO KASEI Co., LTD.)) introduced as a urethane-forming catalyst at a constant inner temperature of 50°C, and 82.0 g of 1-isocyanatomethylmethyldimethoxysilane (purity 95%) was introduced so that the NCO/OH would be 0.97. Then, the urethane-forming reaction of polymer (pP-4) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A10)").

The Mn and Mw/Mn of polymer (A10) were 13,000 and 1.35, respectively.

### (PRODUCTION EXAMPLE 11: Production of polymer (A11))

Propylene oxide (hereinafter referred to as "PO") was reacted with polyoxypropylene glycol (Mw: 3,000) as the initiator in the presence of 50 ppm of a zinc hexacyanocobaltate-tert-butyl alcohol complex catalyst to obtain a polyoxypropylene diol (hereinafter referred to as "pP-5") having a number average molecular weight (Mn) of 10,000 and a molecular weight distribution (Mw/Mn) of 1.2.

In a pressure proof reactor (inner volume 5 L), 3,000 g of polymer (pP-5) was dehydrated under reduced pressure at a constant inner temperature of 110°C. After the atmosphere in the reactor was replaced by nitrogen gas, polymer (pP-5) was stirred with about 160 ppm, based on pP-5, of an inorganic bismuth catalyst (NEOSTANN U-600 (manufactured by NITTO KASEI Co., LTD.)) introduced as a urethane-forming catalyst at a constant inner temperature of 50°C, and 98.4 g of 1-isocyanatomethylmethyldimethoxysilane (purity 95%) was introduced so that the NCO/OH would be 0.97. Then, the urethane-forming reaction of polymer (pP-5) and 1-isocyanatomethylmethyldimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal methyldimethoxysilyl groups (hereinafter referred to as "polymer (A11)").

The Mn and Mw/Mn of polymer (A11) were 11,000 and 1.33, respectively.

### (PRODUCTION EXAMPLE 12: Production of polymer (A12))

PO was reacted with polyoxypropylene glycol (Mw: 3,000) as the initiator in the presence of 50 ppm of a zinc hexacyanocobaltate-tert-butyl alcohol complex catalyst (DMC glyme) to obtain a polyoxypropylene diol (hereinafter referred to as "pP-A") having a number average molecular weight (Mn) of 16,000 and a molecular weight distribution (Mw/Mn) of 1.38.

Separately, PO was reacted with polyoxypropylene triol (Mw: 5,000) as the initiator in the presence of a zinc hexacyanocobaltate-glyme complex catalyst to obtain a polyoxypropylene triol (polymer pP-B) having a number average molecular weight (Mn) of 20,000 and a molecular weight distribution (Mw/Mn) of 1.30.

Polymers pP-A and pP-B were mixed in a mass ratio of pP-A:pP-B = 7:3 to obtain polymer mixture pP-C.

A methanol solution of sodium methoxide was added to polymer mixture pP-C in an amount of 1.05 eq per hydroxy group in polymer mixture pP-C, and the hydroxy groups in the polyoxyalkylene glycol were converted to -ONa groups by heating under reduced pressure while the methanol was distilled off. Then, the polymer was reacted with 1.2 eq of allyl chloride per -ONa group, then the unreacted ally chloride was removed under reduced pressure, and the salt formed as a by-product was removed to purify allyl-terminated oxyalkylene polymer (pP-D).

1,000 g of polymer (pP-D) was dehydrated in a separable flask at 100°C for 2 hours, cooled to 80°C, mixed with an isopropanol solution of chloroplatinic acid and then reacted with 14.7 g of methyldimethoxyhydrosilane at 80°C for 4 hours. Then, the unreacted silane was removed at the same temperature for 2 hours to obtain polymer (A12). The Mn and Mw/Mn of polymer (A12) were 17,000 and 1.39, respectively.

### (PRODUCTION EXAMPLE 13: Production of polymer (A13))

400 g of polymer (A5) was put in a pressure proof reactor equipped with a stirrer and heated to about 67°C. While the temperature in the reactor was maintained at about 67°C, polymerization was carried out with stirring by adding a liquid mixture containing 72 g of methyl methacrylate, 6.5 g of n-butyl acrylate, 29.0 g of n-butyl methacrylate, 15.0 g of 3-methacryloyloxypropyltriethoxysilane, 14.0 g of n-dodecyl mercaptan and 2.5 g of 2,2'-azobis(2,4-dimethylvaleronitrile) (trade name: V65, manufactured by Wako Pure Chemical Industries, Ltd.) dropwise over 8 hours to obtain polymer (A13) having a (meth)acrylate copolymer dispersed in polymer (A5). The (meth)acrylate copolymer was centrifugally extracted from polymer (A13) with hexane, and the number average molecular weight (Mn) of the (meth)acrylate copolymer was measured. The number average molecular weight (Mn) of the (meth)acrylate copolymer was 4,000.

### (PRODUCTION EXAMPLE 14: Production of polymer (A14))

A polyoxypropylene diol (polymer (pP-6)) having a number average molecular weight (Mn) of 15,000 and a molecular weight distribution (Mw/Mn) of 1.2 was obtained in the same manner as in Production Example 1 except that the initiator was a polyoxypropylene diol (Mw: 3,000), and the molecular weight of the resulting polymer was different.

In a pressure proof reactor (inner volume 5 L), 3,000 g of polymer (pP-6) was dehydrated under reduced pressure at a constant inner temperature of 110°C. After the atmosphere in the reactor was replaced by nitrogen gas, polymer (pP-6) was stirred with about 80 ppm, based on pP-6, of an organic tin compound catalyst having a sulfur-containing ligand (NEOSTANN U-860 (manufactured by NITTO KASEI Co., LTD.)) introduced as a urethane-forming catalyst at a constant inner temperature of 50°C, and 86.1 g of 3-isocyanatopropyltrimethoxysilane (purity 95%) was introduced so that the NCO/OH would be 0.97. Then, the urethane-forming reaction of polymer (pP-6) and 3-isocyanatopropyltrimethoxysilane was carried out for 8 hours at a constant inner temperature of 80°C, and after it was confirmed by FT-IR that the isocyanate peak had disappeared, the reaction system was cooled to ordinary temperature to obtain an oxypropylene polymer having terminal trimethoxysilyl groups (hereinafter referred to as "polymer (A14)").

The Mn and Mw/Mn of polymer (A14) were 16,100 and 1.38, respectively.

### (EXAMPLES 1 TO 28 AND COMPARATIVE EXAMPLES 1 TO 16)

### [Production of raw curable compositions]

Raw curable compositions, Examples 1 to 28, were prepared by adding acids to polymers A1 to A13 and a 7:3 (mass ratio) mixture of A5 and A12 in the amounts (parts by mass) shown in Table 1. In Comparative Examples 1 to 13, no acid was used, and in Comparative Examples 14 and 15, acids were added in the amounts shown in Table 2. In Comparative Example 16, instead of an acid, mercaptopropyltrimethoxysilane was added in the amount shown in Table 2. The amounts of acids shown in Tables 1 and 2 are represented in parts by mass per 100 parts by mass of the respective polymers.

The following acids were used.

Phosphoric acid: manufactured by Junsei Chemical Co., Ltd., special grade reagent, conc. 85%

Aqueous acidic phosphoric ester: manufactured by Daihachi Chemical Industry Co., Ltd., AP-8 (a mixture of bis(2-ethylhexyl) phosphate [O=P(OH)(OC₈H₁₇)₂] and mono(2-ethylhexyl) phosphate [O=P(OC_{B}H₁₇)(OH)₂])

Lactic acid: manufactured by Junsei Chemical Co., Ltd., special grade reagent, conc. 85 to 92.0%

Aqueous acetic acid: manufactured by Junsei Chemical Co., Ltd., special grade reagent, conc. 99.7%

Aqueous hydrochloric acid: manufactured by Junsei Chemical Co., Ltd., special grade reagent, conc. 69 to 70%

Aqueous sulfuric acid: manufactured by Junsei Chemical Co., Ltd., 1st grade reagent, conc. 95% aqueous solution

### [Evaluation of physical properties of raw curable compositions]

### [EVALUATION EXAMPLE 1] Evaluation of the viscosity increases of raw curable compositions

The viscosity increase of each raw curable composition was determined.

The viscosity increase was determined with E viscometer (product name: RE80 viscometer, TOKI SANGYO CO. LTD., with a rotor No. 4) at 25°C. Initial viscosity

(Pa·s) is the viscosity of a raw curable composition fresh after preparation, aged viscosity (Pa·s) is the viscosity of a raw curable composition measured after 2 weeks of storage at 70°C, and the viscosity increase is the percentage of (aged viscosity - initial viscosity)/initial viscosity. The viscosity increase was determined similarly with the raw curable compositions of Comparative Examples. The results are shown below in Tables 1 and 2.

### [EVALUATION EXAMPLES 2] Evaluation of odor and discoloration of raw curable compositions and corrosion by raw curable compositions

The odor and discoloration of each raw curable composition and corrosion by each curable composition were evaluated. The results are shown in Tables 1 and 2.

The odor was evaluated by packing 200 ml of a raw curable composition in a 250 ml container and smelling the composition after one-week storage at 70°C. Each raw curable composition was examined for discoloration by the naked eye after two-week storage at 70°C and rated as discolored when the Hazen number (according to JIS K 0101) was 100 or above. The insides of the aluminum cans used for the storage stability tests were examined for corrosion by the naked eye based on the presence or absence of rust. The raw curable compositions of Comparative Examples were evaluated similarly.

In Tables 1 and 2, for odor, ο indicates odorless, and × indicates odorous, for discoloration, o indicates not discolored, and × indicates discolored, and for corrosion, o indicates not corroded, and × indicates corroded.

**TABLE 1**

| | Polymer | Urethanization catalyst | Type of acid | Added amount parts by mass | Acid component concentration parts by mass | Initial viscosity Pa·s | Aged viscosity Pa·s | Viscosity increase % | Odor | Discoloration | Corrosion |
|---|---|---|---|---|---|---|---|---|---|---|---|
| Ex. 1 | A1 | NACEM Zinc | Phosphoric acid | 0.002 | 0.0017 | 31,000 | 42,000 | 35 | ○ | ○ | ○ |
| Ex. 2 | A2 | NAPHTHEX Ferrous | Phosphoric acid | 0.002 | 0.0017 | 36,000 | 50,500 | 40 | ○ | ○ | ○ |
| Ex. 3 | A3 | NA̅CEM Copper | Phosphoric acid | 0.002 | 0.0017 | 37,000 | 50,000 | 35 | ○ | ○ | ○ |
| Ex. 4 | A4 | NEOSTANN U-860 | Phosphoric acid | 0.002 | 0.0017 | 28,000 | 45,000 | 60 | ○ | ○ | ○ |
| Ex. 5 | A5 | NEOSTANN U-600 | Phosphoric acid | 0.001 | 0.0009 | 30,500 | 40,000 | 30 | ○ | ○ | ○ |
| Ex. 6 | A5 | NEOSTANN U-600 | Phosphoric acid | 0.002 | 0.0017 | 30,500 | 40,000 | 30 | ○ | ○ | ○ |
| Ex. 7 | A5 | NEOSTANN U-600 | Phosphoric acid | 0.004 | 0.0017 | 30,500 | 41,200 | 35 | ○ | ○ | ○ |
| Ex. 8 | A5 | NEOSTANN U-600 | Acidic phosphoric ester | 0.0025 | 0.0025 | 30,500 | 44,300 | 45 | ○ | ○ | ○ |
| Ex. 9 | A5 | NEOSTANN U-600 | Acetic acid | 0.004 | 0.004 | 30,500 | 46,000 | 50 | ○ | ○ | ○ |
| Ex. 10 | A5 | NEOSTANN U-600 | Lactic acid | 0.002 | 0.0018 | 30,500 | 46,000 | 50 | ○ | ○ | ○ |
| Ex. 11 | A5 | NEOSTANN U-600 | Hydrochloric acid | 0.002 | 0.0007 | 30,500 | 46,000 | 50 | ○ | × | × |
| Ex. 12 | A6 | DMC glyme | Phosphoric acid | 0.001 | 0.00085 | 31,000 | 34,000 | 10 | ○ | ○ | ○ |
| Ex. 13 | A6 | DMC glyme | Phosphoric acid | 0.002 | 0.0017 | 31,000 | 36,000 | 15 | ○ | ○ | ○ |
| Ex. 14 | A6 | DMC glyme | Phosphoric acid | 0.003 | 0.0026 | 31,000 | 36,000 | 15 | ○ | ○ | ○ |
| Ex. 15 | A6 | DMC glyme | Phosphoric acid | 0.025 | 0.0212 | 31,000 | 54,500 | 75 | ○ | ○ | ○ |
| Ex. 16 | A6 | DMC glyme | Acidic phosphoric ester | 0.0025 | 0.0025 | 31,000 | 42,000 | 35 | ○ | ○ | ○ |
| Ex. 17 | A6 | DMC glyme | Acetic acid | 0.001 | 0.001 | 31,000 | 45,000 | 45 | ○ | ○ | ○ |
| Ex. 18 | A6 | DMC glyme | Acetic acid | 0.009 | 0.009 | 31,000 | 50,000 | 60 | ○ | ○ | ○ |
| Ex. 19 | A6 | DMC glyme | Lactic acid | 0.018 | 0.0162 | 31,000 | 48,000 | 55 | ○ | ○ | ○ |
| Ex. 20 | A6 | DMC glyme | Hydrochloric acid | 0.002 | 0.0007 | 31,000 | 43,500 | 40 | ○ | × | × |
| Ex. 21 | A6 | DMC glyme | Sulfuric acid | 0.001 | 0.001 | 31,000 | 40,000 | 30 | ○ | × | ○ |
| Ex. 22 | A7 | NEOSTANN U-600 | Phosphoric acid | 0.05 | 0.0425 | 34,000 | 59,500 | 75 | ○ | ○ | ○ |
| Ex. 23 | A8 | NACEM Zinc | Phosphoric acid | 0.002 | 0.0017 | 28,000 | 43,500 | 55 | ○ | ○ | ○ |
| Ex. 24 | A9 | DMC glyme | Phosphoric acid | 0.002 | 0.0017 | 20,000 | 24,000 | 20 | ○ | ○ | ○ |
| Ex. 25 | A10 | NEOSTANN U-600 | Phosphoric acid | 0.002 | 0.0017 | 12,000 | 14,500 | 20 | ○ | ○ | ○ |
| Ex. 26 | A11 | NEOSTANN U-600 | Phosphoric acid | 0.002 | 0.0017 | 7,000 | 11,500 | 60 | ○ | ○ | ○ |
| Ex. 27 | A5:A12 =7:3 | NEOSTANN U-600 | Phosphoric acid | 0.002 | 0.0017 | 22,600 | 27,000 | 20 | ○ | ○ | ○ |
| Ex. 28 | A13 | NEOSTANN U-600 | Phosphoric acid | 0.002 | 0.0017 | 45,000 | 56,000 | 25 | ○ | ○ | ○ |

**TABLE 2**

| | Polymer | Urethanization catalyst | Type of acid | Added amount parts by mass | Acid component concentration parts by mass | Initial viscosity Pa·s | Aged viscosity Pa·s | Viscosity increase % | Odor | Discoloration | Corrosion |
|---|---|---|---|---|---|---|---|---|---|---|---|
| Comp. Ex. 1 | A1 | NACEM Zinc | - | - | - | 31,000 | 82,000 | 165 | ○ | ○ | ○ |
| Comp. Ex. 2 | A2 | NAPHTHEX Ferrous | - | - | - | 36,000 | 90,000 | 150 | ○ | ○ | ○ |
| Comp. Ex. 3 | A3 | NACEM Copper | - | - | - | 37,000 | 89,000 | 140 | ○ | ○ | ○ |
| Comp. Ex. 4 | A4 | NEOSTANN U-860 | - | - | - | 28,000 | 84,000 | 200 | ○ | ○ | ○ |
| Comp. Ex. 5 | A5 | NEOSTANN U-600 | - | - | - | 30,500 | 82,500 | 170 | ○ | ○ | ○ |
| Comp. Ex. 6 | A6 | DMC glyme | - | - | - | 31,000 | 74,500 | 140 | ○ | ○ | ○ |
| Comp. Ex. 7 | A7 | NEOSTANN U-600 | - | - | - | 34,000 | 136,000 | 300 | ○ | ○ | ○ |
| Comp. Ex. 8 | A8 | NACEM Zinc | - | - | - | 28,000 | 78,500 | 180 | ○ | ○ | ○ |
| Comp. Ex. 9 | A9 | DMC glyme | - | - | - | 20,000 | 46,000 | 130 | ○ | ○ | ○ |
| Comp. Ex. 10 | A10 | NEOSTANN U-600 | - | - | - | 12,000 | 25,000 | 110 | ○ | ○ | ○ |
| Comp. Ex. 11 | A11 | NEOSTANN U-600 | - | - | - | 7,000 | 14,000 | 100 | ○ | ○ | ○ |
| Comp. Ex. 12 | A5:A12 =7:3 | NEOSTANN U-600 | - | - | - | 22,600 | 54,500 | 140 | ○ | ○ | ○ |
| Comp. Ex. 13 | A13 | NEOSTANN U-600 | - | - | - | 45,000 | 10,3500 | 130 | ○ | ○ | ○ |
| Comp. Ex. 14 | A5 | NEOSTANN U-600 | Phosphoric acid | 1 | 0.85 | Gelled | Gelled | - | ○ | ○ | ○ |
| Comp. Ex. 15 | A5 | NEOSTANN U-600 | Phosphoric acid | 0.5 | 0.425 | Gelled | Gelled | - | ○ | ○ | ○ |
| Comp. Ex. 16 | A5 | NEOSTANN U-600 | Mercaptosilane | 0.05 | - | 30,500 | 40,000 | 30 | × | ○ | ○ |

### (EXAMPLES 29 TO 35 AND COMPARATIVE EXAMPLE 17)

### [Production of final curable compositions]

100 Parts by mass of the raw curable composition (initial viscosity sample) of Example 1 was mixed with 50 parts by mass of surface-treated calcium carbonate (Hakuenka CCR, manufactured by Shiraishi Calcium Kaisha, Ltd.) as a filler and 30 parts by mass of heavy calcium carbonate (NS-400, manufactured by NITTO FUNKA KOGYO K.K.) as a filler in a planetary stirring machine (manufactured by KURABO INDUSTRIES LTD.). The mixture was cooled to 25°C and then further mixed with 5 parts by mass of vinyltrimethoxysilane (KBM-1003, manufactured by Shin-Etsu Chemical Co., Ltd.), 3 parts by mass of N-(2-aminoethyl)-3-aminopropyltrimethoxysilane (KBM-603, manufactured by Shin-Etsu Chemical Co., Ltd.) and 1 part by mass of 3-glycidyloxypropyltrimethoxysilane (KMB-403, manufactured by Shin-Etsu Chemical Co., Ltd.). Then, 2 parts by mass of dibutyltin dilaurate as a curing catalyst was mixed to obtain a final curable composition, Example 29.

A final curable composition for viscosity measurement was prepared by using the raw curable composition (aged viscosity sample) instead of the raw curable composition (initial viscosity sample).

Final curable compositions of Examples 30 to 35 and a final curable composition (compounded composition) of Comparative Example 17 were prepared in the same manner except that instead of the raw curable composition of Example 1, the raw curable compositions of Examples 2 to 5 and 12 were used.

### [Evaluation of physical properties of final curable compositions]

### [EVALUATION EXAMPLE 3] Evaluation of increase in the viscosities of final curable compositions and compounded composition

Samples from the final curable compositions of Examples 29 to 35 and the compounded composition of Comparative Example 17 immediately after their preparation were designated as initial viscosity samples, and their viscosities were measured at 25°C. Similarly, samples from them stored at 25°C for 5 hours were designated as aged viscosity samples, and then, their viscosities (unit; Pa·s) were determined with a B8U viscometer using a rotor NO. 6 at 10 rpm. The results of the viscosity measurements are shown in Table 3.

Viscosity increase is defined as the percentage of (the viscosity of a final curable composition (aged viscosity sample) - the final curable composition (initial viscosity sample)) / the final curable composition (initial viscosity sample). The results are shown in Table 3.

### [EVALUATION EXAMPLE 4] Tensile test on final curable compositions and compounded composition

Tensile tests were carried out with test specimens prepared from a cured product of each curable composition of Examples 29 to 35 or the compounded composition of Comparative Example 17 in accordance with JIS K6251. The results are shown in Table 3.

Specifically speaking, each of the final curable compositions of Examples and the compounded composition of Comparative Example was formed into a 2 mm-thick sheet, cured at 23°C at a humidity of 50% for 7 days, then aged at 50°C at a humidity 65% for 7 days and allowed to stand at 23°C at a humidity of 50% for at least 24 hours to obtain a cured product. The cured sheet was punched into a dumbbell-shaped test specimens No. 3. The thickness of each specimen was measured, and the stress (M50, unit: N/mm²) at 50% elongation, the maximum tensile stress (Tmax, unit: N/mm²), and the elongation at break (E, unit: %) were measured by using a tensilon tester. The results are shown in Table 3.

### [EVALUATION EXAMPLE 5] Surface tack test on final curable compositions and compounded composition

Surface tack tests were carried out on each of the final curable compositions of Examples and the compounded composition of Comparative Example in accordance with JIS A1439.

Specifically speaking, the surface of each of the final curable compositions and the compounded composition was touched with a finger, and the time at which the surface became no longer sticky to the finer was measured as tack free time (min). The results are shown in Table 3.

**TABLE 3**

| | Polymer composition (Table 1) | Initial viscosity Pa·s | Aged viscosity Pa·s | Viscosity increase % | Tack free min | M50 | Tmax | E |
|---|---|---|---|---|---|---|---|---|
| Ex. 29 | Ex. 1 | 190 | 250 | 32 | 6 | 1.3 | 2.5 | 220 |
| Ex. 30 | Ex. 2 | 220 | 300 | 36 | 5 | 1.3 | 2.5 | 220 |
| Ex. 31 | Ex. 3 | 225 | 300 | 33 | 5 | 1.3 | 2.5 | 230 |
| Ex. 32 | Ex. 4 | 175 | 270 | 54 | 6 | 1.1 | 2.3 | 240 |
| Ex. 33 | Ex. 5 | 190 | 240 | 26 | 6 | 1.2 | 2.4 | 220 |
| Ex. 34 | Ex. 12 | 190 | 210 | 10 | 6 | 1.2 | 2.4 | 220 |
| Ex. 35 | Ex. 8 | 190 | 250 | 30 | 6 | 1.2 | 2.4 | 220 |
| Comp. Ex. 17 | Comp. Ex. 5 | 190 | 420 | 120 | 6 | 1.2 | 2.4 | 230 |

### (EXAMPLES 36 TO 40 AND COMPARATIVE EXAMPLE 18)

Examples of final curable compositions formulated by using the raw curable composition of the present invention, an example of a compounded composition formulated without using the raw curable composition of the present invention and the physical properties of their cured products are shown below in Table 4. The formulations are expressed in parts by mass. The physical properties of the cured products were evaluated in the same manners as in the previous Examples.

The viscosities of the final curable compositions and compounded composition were determined in the same manner as in Evaluation Example 3.

**TABLE 4**

| | | | Ex. 36 | Ex.37 | Ex. 38 | Ex. 39 | Ex. 40 | Comp. Ex. 18 |
|---|---|---|---|---|---|---|---|---|
| Formulation | Composition of Ex. 5 | | 100 | 50 | 50 | 50 | 50 | - |
| | Composition of Ex. 28 | | - | 50 | - | 50 | - | - |
| | Polymer A12 | | - | - | 50 | - | - | - |
| | Polymer A14 | | - | - | - | - | 50 | - |
| | Composition of Comp. Ex. 14 | | - | - | - | - | - | 100 |
| | Filler | ICEBERG K ^{*1} | - | 10 | - | 10 | 10 | - |
| | | Hakuenka CCR *2 | 50 | 50 | 50 | 50 | 50 | 50 |
| | | NS-400 *3 | 30 | 20 | 30 | 20 | 20 | 30 |
| | Plasticizer | PMLS1102 *4 | 20 | 20 | 20 | 20 | 20 | 20 |
| | Thixotropic agent | DISPARLON 6500 *5 | 3 | 3 | 3 | 3 | 3 | 3 |
| | Dehydration | KBM-1003 *6 | 3 | 3 | 3 | 3 | 3 | 3 |
| | Tackifier | KBM-603 *7 | 3 | 3 | 3 | 5 | 3 | 3 |
| | | KBM-403 *8 | 1 | 1 | 1 | 1 | 1 | 1 |
| | Curing catalyst | DBDTL *9 | 2 | - | - | - | - | 2 |
| | | U810 (tin octanoate) *10 | - | 2 | 2 | - | 2 | - |
| Physical properties | M50 [N/mm²] | | 0.9 | 1.2 | 0.7 | 1.4 | 1.6 | Gelled during preparation |
| | Tensile test Tmax [N/mm²] | | 2.2 | 2.8 | 2.0 | 2.8 | 3.0 | |
| | E% | | 250.0 | 255.0 | 270.0 | 245.0 | 210 | |
| | Initial viscosity [Pa·s] | | 100 | 110 | 85 | 110 | 90 | Gelled |

| | | | | | | | | |
|---|---|---|---|---|---|---|---|---|
| *1: ICEBERG K (product name) calcined clay (manufactured by Shiraishi Calcium Kaisha, Ltd) *2: Hakuenka CCR (product name) calcium carbonate having a surface treated with fatty acid (manufactured by Shiraishi Calcium Kaisha, Ltd.) *3: NS-400 (product name) heavy calcium carbonate (manufactured by NITTO FUNKA KOGYO K.K.) *4: Polyoxypropylene monool having a molecular weight of 2000 (manufactured by Asahi Glass Co., Ltd.) *5: Fatty acid amide thixotropic agent (manufactured by Kusumoto Chemicals, Ltd.) *6: KBM-1003 (product name) vinyltrimethoxysilane (manufactured by Shin-Etsu Chemical Co., Ltd.) *7: KBM-603 (product name) N-(2-aminoethyl)-3-aminopropyltrimethoxysilane (manufactured by Shin-Etsu Chemical Co., Ltd.) *8: KBM-403 (product name) 3-glycidyloxypropyltrimethoxysilane (manufactured by Shin-Etsu Chemical Co., Ltd.) *9: DBTDL (product name) dibutyltin laurate (manufactured by Tokyo Chemical Industry Co., Ltd.) *10: U810 (product name) tin octanoate (manufactured by NITTO KASEI Co., LTD.) | | | | | | | | |

As shown above in Table 1, the raw curable compositions of the present invention containing a polymer and an acid, Examples 1 to 28, showed good storage stability and at most 10% increases from the initial viscosities to the aged viscosities. In contrast, acid-free compositions of Comparative Examples 1 to 13 showed viscosity increases of 100% or above and were poor in storage stability. The raw curable compositions containing an acid more than the range specified in the present invention, Comparative Examples 14 and 15, underwent gelation. Comparative Example 16 containing an active hydrogen containing compound other than an acid, unlike the present invention, had an odor, though its viscosity increase was small.

As shown in Ta le 3, the final curable compositions obtained by using the raw curable compositions of the present invention, Examples 29 to 35, showed viscosity increases of at most 100T and short tack free times. The viscosity of the composition of Comparative Example 17 obtained by using the raw curable composition of the present invention increased more than 100%.

As shown in Table 4, the final curable compositions of Examples 36 to 40 obtained by using the raw curable compositions of the present invention did not undergo gelation during preparation and had good physical properties. The compounded composition of Comparative Example 13 obtained without using the raw curable composition of the present invention underwent gelation.

### INDUSTRIAL APPLICABILITY

The curable composition of the present invention containing a hydrolyzable silyl group-containing urethane compound has a high curing rate, good storage stability and no odor. Hence, it is useful as an adhesive, a sealant and the like.

The entire disclosure of Japanese Patent Application No. 2010-056555 filed on March 12, 2010 including specification, claims and summary is incorporated herein by reference in its entirety.

## Claims

1. A curable composition comprising 100 parts by mass of a polymer (P) obtained by a urethane-forming reaction of a polymer (pP) having a polyoxyalkylene chain and hydroxyl groups and a compound (U) represented by the following formula (1): 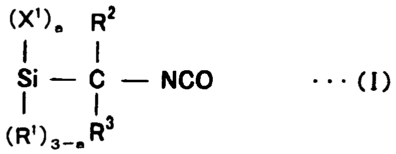 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst and from 0.0001 to 0.1 part by mass of an inorganic acid or an organic acid having an active hydrogen bonded to an oxygen atom.

2. The curable composition according to Claim 1, wherein the inorganic acid or the organic acid having an active hydrogen bonded to an oxygen atom has a dissociation constant pKa of at most 8.

3. The curable composition according to Claim 1 or 2, wherein the inorganic acid or the organic acid having an active hydrogen bonded to an oxygen atom has a dissociation constant pKa of from 1 to 8.

4. The curable composition according to Claim 1, wherein the inorganic acid or the organic acid having an active hydrogen bonded to an oxygen atom is an acid selected from the group consisting of acetic acid, lactic acid, phosphoric acid and acidic phosphoric esters.

5. The curable composition according to any one of Claims 1 to 4, wherein the polymer (P) has a number average molecular weight of from 1,000 to 50,000.

6. The curable composition according to any one of Claims 1 to 5, wherein in the formula (I), X¹ is a methoxy group.

7. The curable composition according to any one of Claims 1 to 6, wherein in the formula (I), R² and R³ are hydrogen atoms.

8. A method of improving the storage stability of a curable composition, which comprises adding from 0.0001 to 0.1 part by mass of an inorganic acid or an organic acid having an active hydrogen bonded to an oxygen atom to a polymer (P) obtained by a urethane-forming reaction of a polymer (pP) having a polyoxyalkylene chain and hydroxyl groups and a compound (U) represented by the following formula (I): 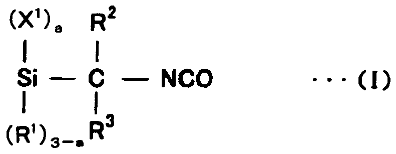 (wherein X¹ is a C₁₋₆ alkoxy group, R¹ is a monovalent C₁₋₂₀ organic group (other than an alkoxy group) which may have a substituent, each of R² and R³ is independently a C₁₋₁₀ alkyl group or a hydrogen atom, and a is an integer of from 1 to 3) in the presence of a urethane-forming catalyst.
